# EUROPEAN PATENT SPECIFICATION

(11) **EP 2 899 111 B1**
(45) Date of publication and mention of the grant of the patent: **12.06.2019**
(21) Application number: 13871788.9
(22) Date of filing: 21.01.2013
(51) Int. Cl.: B63B 9/06, B63B 35/00, B63B 1/10, B63B 35/44, B63B 1/12, F03D 13/25, F03D 13/10

(54) **METHOD FOR ASSEMBLING FLOATING WIND-POWER GENERATION DEVICE, AND FLOATING WIND-POWER GENERATION DEVICE**
VERFAHREN ZUR MONTAGE EINES SCHWIMMENDEN WINDKRAFTGENERATORS UND SCHWIMMENDER WINDKRAFTGENERATOR
PROCÉDÉ D'ASSEMBLAGE DE DISPOSITIF DE GÉNÉRATION D'ÉNERGIE ÉOLIENNE FLOTTANT, ET DISPOSITIF DE GÉNÉRATION D'ÉNERGIE ÉOLIENNE FLOTTANT

(43) Date of publication of application: 29.07.2015
(73) Proprietor: Mitsubishi Heavy Industries, Ltd., Tokyo 108-8215 (JP)
(72) Inventor: HASHIMOTO, Jun, Tokyo 108-8215 (JP); YOKOYAMA, Hiroaki, Tokyo 108-8215 (JP); SHIRAISHI, Yasuaki, Tokyo 108-8215 (JP)
(74) Representative: Intès, Didier Gérard André
(86) International application number: PCT/JP2013/051051
(87) International publication number: WO 2014/112114

(56) References cited:
- WO-A1-2012/041677
- WO-A2-2012/061710
- JP-A- 2010 223 113
- JP-A- 2011 521 820
- US-A1- 2011 210 233
- US-A1- 2011 214 596

## Description

### TECHNICAL FIELD

The present disclosure relates to a method of assembling a floating-body wind turbine power generating apparatus and a floating-body wind turbine power generating apparatus.

### BACKGROUND

A tower of a common wind turbine power generating apparatus includes a plurality of tower elements constituting the tower coupled in the axial direction. The tower elements are produced by forming steel plates in a tubular shape by rolling processing or the like in a factory, and a flange is mounted to each end of the tower elements. Then, the tower elements are transported to a construction site, where the respective flanges of the tower elements are abutted and fastened by bolts, nuts, and the like, so that the plurality of tower elements is coupled to one another in the axial direction. In this way, a tower is erected at a construction site.

### Citation List

### Patent Literature

Patent Document 1: WO2012/041677A1
Patent Document 2: US2011214596A1
Patent Document 3: WO2012/061710A2

### SUMMARY

### Technical Problem

Meanwhile, in a floating-body wind turbine power generating apparatus including a tower erected on a floating body that floats on water surface, a large bending moment is applied to a base part of the tower. The size of the bending moment is approximately three times larger than that of a bottom-mounted wind turbine power generating apparatus of the same scale. To resist such a large bending moment, it is necessary to increase the diameter of the tower especially at the base part of the tower. However, if the diameter of the tower is too large, it may be difficult to produce flanges corresponding to the large diameter. Further, while a flange structure is generally easy to work on, it is less reliable in the bending durability, as compared to welding.

Patent Document 1 discloses an invention of a welding method of coupling tower elements of a wind turbine power generating apparatus in the axial direction integrally by welding. However, in Patent Document 1, there is no disclosure of consideration for bending durability of a tower of a floating-body wind turbine power generating apparatus when the tower is erected.
Patent Document 2 discloses a construction method for a floating system including a plurality of vertically extending columns, a top deck having a plurality of through-bores coupled to the upper end of each of the columns and a wind turbine assembly supported by the top deck at the center.
Patent Document 3 discloses a floating hybrid composite wind turbine platform and tower system.

The present invention was made in view of the above conventional issues. An object is to provide a method of assembling a floating-body wind turbine power generating apparatus including a tower with high bending durability, and a floating-body wind turbine power generating apparatus.

### Solution to Problem

According to at least one embodiment of the present invention, a method for assembling a floating-body wind turbine power generating apparatus which at least includes: a floating body including at least one column and configured to float on water surface; and a tower erected on the at least one column. The method is defined in claim 1, and includes a tower erecting step of erecting the tower on the at least one column by joining the at least one column and the tower to each other by welding.

In the tower erecting step, the tower and the at least one column are joined to each other by embedding a base end side of the tower into the at least one column, and welding an outer circumferential surface and/or an inner circumferential surface of an embedded section to the at least one column over a predetermined length in an axial direction of the tower.

The above method of assembling a floating-body wind turbine power generating apparatus includes a tower erecting step of erecting the tower on the at least one column by welding the at least one column and the tower to each other. Thus, at the base part of the tower to which a large bending moment is applied, reliability in bending durability is high because the column and the tower are joined by welding as compared to a case where the column and the tower are joined by the conventional flange structure. Further, it is also possible to increase the diameter of the tower without being limited by the production limit of the flange diameter.

Further, a portion of the base end side of the tower is embedded inside the column, and the outer circumferential surface and/or the inner circumferential surface of the embedded section and the column are welded to each other over a predetermined length in the axial direction. Thus, it is possible to effectively reduce the bending stress generated on the base end part of the tower.

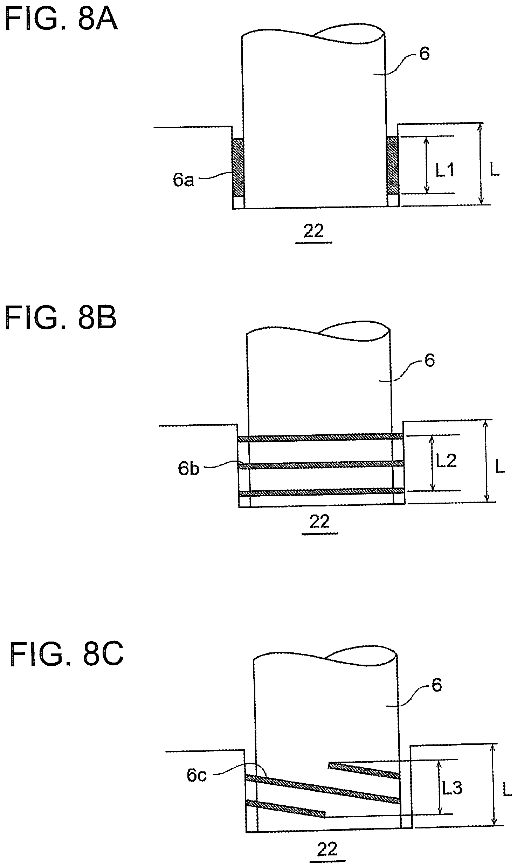

Here, the above described "welding to the column over a predetermined length in the axial direction" at least includes following three aspects in particular. In the first aspect illustrated in FIG. 8A, a vertical welding portion 6a that joins the tower 6 and the column 22 is formed over a predetermined length L1 (L1 ≤ L, where L is the entire length of the embedded section) in the axial direction of the tower 6. In the second aspect illustrated in FIG. 8B, a plurality of welding portions 6b each having a circumferential shape and joining the tower 6 and the column 22 is formed over a predetermined length L2 (L2 ≤ L) at intervals in the axial direction of the tower 6. In the third aspect illustrated in FIG. 8C, a welding portion 6c having a helix shape and joining the tower 6 and the column 22 is formed over a predetermined length L3 (L3 ≤ L) in the axial direction of the tower 6.

In one embodiment, the tower includes a tower body and a lower-tower connection pipe connected to the tower body. The tower erecting step includes: a connection-pipe inserting step of inserting the lower-tower connection pipe into the at least one column; a connection-pipe joining step of welding an outer circumferential surface and/or an inner circumferential surface of the lower-tower connection pipe inserted into the at least one column to the at least one column over a predetermined length in the axial direction of the tower; and a tower forming step of welding the tower body to the lower-tower connection pipe joined to the at least one column.

The tower of the above embodiment includes the tower body and the lower-tower connection pipe for connecting the column and the tower body. In the assembling method of the above embodiment, the lower-tower connection pipe is inserted into the column and welded to the column, and the tower body is welded to the lower-tower connection pipe, so that the tower is erected on the column. Employing the lower-tower connection pipe for coupling the column and the tower body as described above improves the workability as compared to a case where the lower-tower connection pipe is not provided.

In the above embodiment, in the connection-pipe joining step, the lower-tower connection pipe inserted into the at least one column is joined to the at least one column via at least one plate member which extends in the axial direction of the tower.

With the above configuration, the lower-tower connection pipe and the column are joined to each other via the least one plate member extending in the axial direction of the tower. Thus, it is possible to effectively reduce the bending stress generated on the base end part of the tower.

In another embodiment, the tower includes a tower body, a lower-tower connection pipe connected to the tower body, and a ring part connected to the lower-tower connection pipe. The tower erecting step includes: a ring-part forming step of forming the ring part inside the at least one column and welding one of an outer circumferential surface and/or an inner circumferential surface of the ring part to the at least one column over a predetermined length in the axial direction of the tower; a connection-pipe joining step of welding the lower-tower connection pipe to the ring part formed inside the at least one column; and a tower forming step of welding the tower body to the lower-tower connection pipe welded to the ring part.

The tower of the above embodiment includes the tower body, the lower-tower connection pipe connected to the tower body, and the ring part connected to the lower-tower connection pipe. In the assembling method of the above embodiment, the ring part is formed at first inside the column, the lower-tower connection pipe is welded to the ring part, and the tower body is welded to the lower-tower connection pipe, so that the tower is erected on the column. Forming the ring part at first inside the column and then connecting the lower-tower connection pipe to the ring part as described above improves the workability compared to a case where the ring part is not provided.

In the above embodiment, in the ring-part forming step, the ring part formed inside the at least one column is joined to the at least one column via at least one plate member which extends in the axial direction of the tower.

With the above configuration, the ring part and the column are joined to each other via the at least one plate member extending in the axial direction of the tower, which makes it possible to effectively reduce bending stress generated at the base end part of the tower.

In some embodiments, at least one reinforcement rib is welded to an outer circumferential surface and/or an inner circumferential surface of the tower. The at least one reinforcement rib extends over a predetermined length toward a tip end of the tower in the axial direction from a position corresponding to a top surface of the at least one column.

With the above configuration, the reinforcement rib is disposed at a position of the tower to which the largest bending moment is applied, which makes it possible to effectively reduce bending stress generated on the tower.

In one embodiment, the connection-pipe inserting step and the connection-pipe joining step are performed while the floating-body is in a dock or on ground, and the tower forming step is performed while the floating body is floating on water surface and is berthed.

With the above configuration, the lower-tower connection pipe is joined to the column while the floating body is stably disposed in a dock or on the ground, which results in high workability when the lower-tower connection pipe is welded to the column.

Further, since the tower forming step is performed while the floating body is berthed, it is possible to hoist the tower body from the ground and lower the same to be joined to the lower-tower connection pipe, and also to tow the completed floating-body wind turbine power generating apparatus to a desired location directly after completion of assembly.

In another embodiment, the ring-part forming step and the connection-pipe joining step are performed while the floating-body is in a dock or on ground, and the tower forming step is performed while the floating body is floating on water surface and is berthed.

With the above configuration, the ring part is formed inside the column and the lower-tower connection pipe is welded to the ring part while the floating body is stably disposed in a dock or on the ground, which results in high workability.

Further, since the tower forming step is performed while the floating body is berthed, it is possible to hoist the tower body from the ground and lower the same to be joined to the lower-tower connection pipe, and also to tow the completed floating-body wind turbine power generating apparatus to a desired location directly after completion of assembly.

In some embodiments, a welded spot between the lower-tower connection pipe and the tower body is disposed above the top surface of the at least one column. The tower erecting step includes a scaffold providing step of providing a scaffold for workers to move up to at least a height of the welded spot between the lower-tower connection pipe and the tower body, along at least one of the outer circumferential surface or the inner circumferential surface of the lower-tower connection pipe, before the tower forming step.

As described above, since the tower forming step is performed while the floating body is floated on the water surface, setting up such a scaffold on the top surface of the column makes it possible to join the lower-tower connection pipe and the tower body by welding.

In some embodiments, the tower body comprises a plurality of tower segments, and the tower forming step includes a step of welding a tower segment positioned closest to the base end side from among the plurality of tower segments to the lower-tower connection pipe, and a step of joining the plurality of tower segments to one another by welding.

With the above configuration, the plurality of tower segments is integrated with one another by welding, which makes it possible to provide a tower body that has high bending durability.

In the above embodiment, a reinforcement ring is disposed in the vicinity of a welded spot of each of the plurality of the tower segments.

The respective welded spots of the tower segments are also open ends and thus easily deformed by the weight of the tower segments. Thus, as described above, with the reinforcement rings disposed in the vicinity of the welded spots, it is possible to prevent deformation of the tower segments at the welded spots.

In some embodiments, at least an operation unit for float-sink control devices for controlling a float-sink state of the floating body is disposed inside the lower-tower connection pipe.

As described above, the lower-tower connection pipe is joined to the floating body while the floating body is disposed on the ground in a dock, for instance. Thus, with the operation unit for float-sink control devices for controlling the float-sink state of the floating body disposed inside the lower-tower connection pipe, it is possible to conduct a sink-float test immediately after completion of the joining work of the lower-tower connection pipe to the floating body, on stable water surface in the vicinity of a dock, for instance.

In some embodiments, H1/H falls within a range of from 0.03 to 0.15, where H1 is an embedment length by which the tower is embedded into the at least one column, and H is an entire length of the tower including the embedment length H1.

The longer the embedment length inside the column is, the more the bending stress generated at the base end part of the tower can be reduced. However, on the other hand, increasing the embedment length of the tower may result in an increase in the construction cost. Thus, setting the ratio of the embedment length H1 to the entire length H of the tower in the above range makes it possible to achieve a good balance of the bending durability and the construction cost in the tower.

In some embodiments, the top surface of the at least one column is formed in a rectangular shape in a planar view, and an annular embedment space having an opening toward the top surface is formed inside the at least one column.

Generally, while a column is formed to have a rectangular cross section, a tower is formed in a tubular shape, and thus the shapes of a column and a tower are different. Thus, with the annular embedment space having an opening toward the top surface formed inside the column and the base end part of the tower embedded in the embedment space, it is possible to easily connect the tower and the column.

Further, according to at least one embodiment of the present invention, a floating-body wind turbine power generating apparatus is defined in claim 15, and at least includes: a floating body including at least one column and configured to float on water surface; and a tower erected on the at least one column. The tower and the at least one column are joined to each other by embedding a base end side of the tower into the at least one column, and welding an outer circumferential surface and/or an inner circumferential surface of an embedded section to the at least one column over a predetermined length in an axial direction of the tower.

In the above floating-body wind turbine power generating apparatus, the column and the tower are joined to each other by welding at the base end part of the tower, to which a large bending moment is applied. Thus, reliability in bending durability is high because the column and the tower are joined by welding, as compared to a case where the column and the tower are joined by the conventional flange structure. Further, it is also possible to increase the diameter of the tower without being limited by the production limit of the flange diameter.

Further, a portion of the base end side of the tower is embedded inside the column, and the outer circumferential surface and/or the inner circumferential surface of the embedded section and the column are welded to each other over a predetermined length in the axial direction. Thus, it is possible to effectively reduce the bending stress generated on the base end part of the tower.

### Advantageous Effects

According to at least one embodiment of the present invention, it is possible to provide a method of assembling a floating-body wind turbine power generating apparatus including a tower that has high bending durability, in which a tower and a column are joined to each other by welding, and a floating-body wind turbine power generating apparatus.

### BRIEF DESCRIPTION OF DRAWINGS

FIG. 1 is an overall view of a floating-body wind turbine power generating apparatus according to one embodiment.
FIGs. 2A to 2C are each a side view of a schematic configuration of a wind turbine power generating apparatus according to one embodiment.
FIGs. 3A and 3B are each a schematic vertical cross-sectional view for describing a joint structure of a tower and a column according to one embodiment, respectively corresponding to the wind turbine power generating apparatuses in FIGs. 2A and 2B.
FIGs. 4A and 4B are each a lateral cross-sectional view for describing a joint structure of a tower and a column according to one embodiment. FIG. 4A is taken along the line a-a, and FIG. 4B is taken along the line b-b.
FIGs. 5A to 5D are each a diagram of reinforcement ribs according to one embodiment.
FIG. 6 is an enlarged cross-sectional view of a welded spot of tower segments.
FIG. 7 is a cross-sectional view of the inside of a lower-tower connection pipe according to one embodiment.
FIGs. 8A to 8C are diagrams for describing a state where a tower is welded to a column over a predetermined length in the axial direction of the tower.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

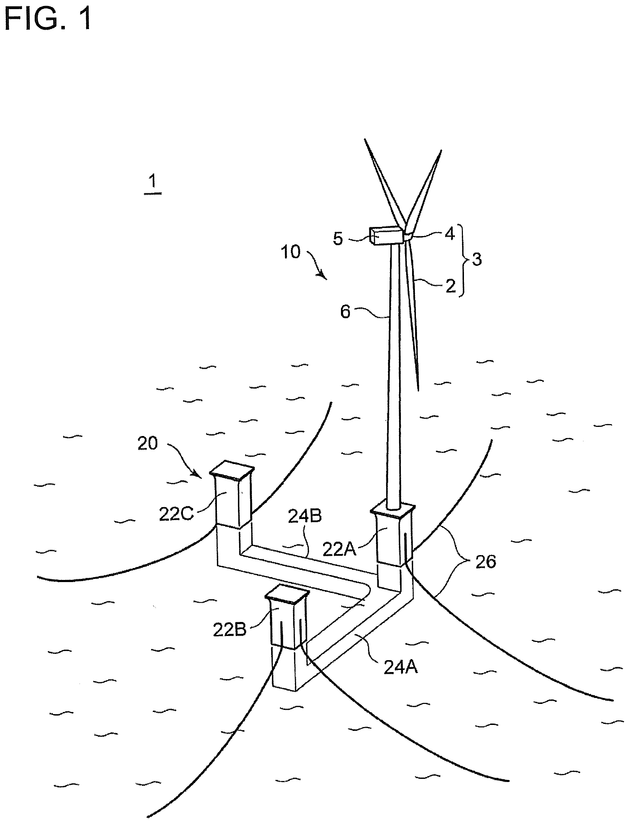

FIG. 1 is an overall view of a floating-body wind turbine power generating apparatus according to one embodiment.

As illustrated in the drawing, the floating-body wind turbine power generating apparatus 1 includes a floating body 20 floating on water surface and a wind turbine generator 10 disposed on the floating body 20.

The wind turbine generator 10 includes a rotor 3, a nacelle 5, and a tower 6. The rotor 3 includes at least one blade 2 and a hub 4, and connects to a generator housed in the nacelle 5 via a rotation shaft. The rotor 3 rotates upon receiving wind at the blade 2, and the rotational force is transmitted to the generator so that electric power is generated.

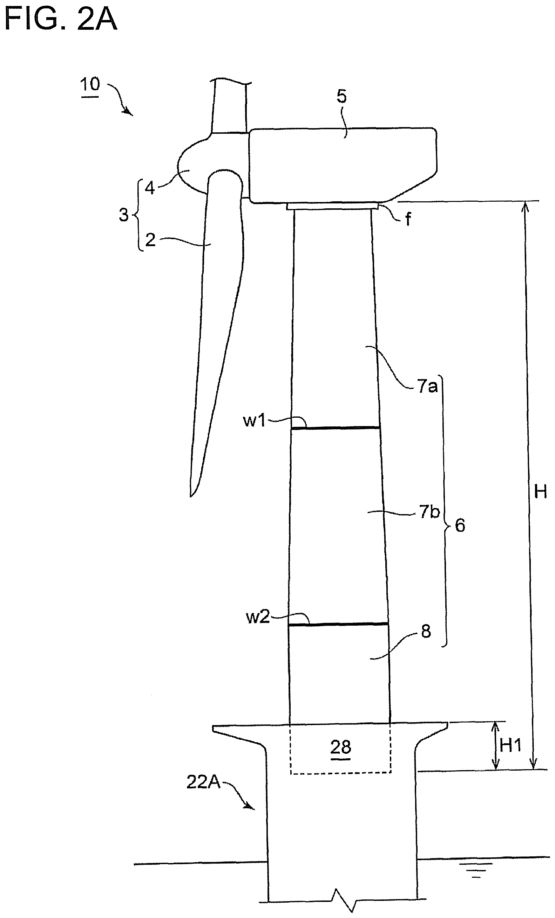

The nacelle 5 is supported rotatably on the tip end part of the tower 6. That is, as illustrated in FIGs. 2A to 2C described below, a flange "f" is mounted to the tip end part of the tower 6, and a yaw rotation bearing (not illustrated) mounted to the flange "f" rotatably supports the nacelle 5. Further, the tower 6 is formed in a tubular shape, whose diameter is larger at the base end part than at the tip end part. The tower 6 is coupled to the floating body 20.

The floating body 20 includes three columns 22 (22A, 22B, 22C), the first lower hull 24A connecting the center column 22A and the left column 22B, and the second lower hull 24B connecting the center column 22A and the right column 22C. As illustrated in FIG. 1, the floating body 20 is formed in a substantially V shape in a planar view. The tower 6 of the above described wind turbine generator 10 is erected on the center column 22A disposed at the center of the three columns 22.

Further, a mooring cable 26 is connected to each of the three columns 22A, 22B, 22C. An anchor (not illustrated) fixed to the water bottom is connected to each mooring cable 26, so that the floating body 20 is moored on the ocean while resisting drift force and a rotational moment.

A method of assembling the floating-body wind turbine power generating apparatus 1 according to one embodiment includes a tower erecting step of erecting the tower 6 on the center column 22A by joining the center column 22A and the tower 6 by welding. In other words, the center column 22A and the tower 6 are joined to each other by welding. Thus, at the base end part of the tower 6 to which a large bending moment is applied, reliability in bending durability is high as compared to a case where the joint is achieved by the conventional flange structure. Further, it is also possible to increase the diameter of the tower 6 without being limited by the production limit of the flange diameter.

FIGs. 2A to 2C are each a side view of a schematic configuration of a tower of a wind turbine power generating apparatus according to one embodiment.

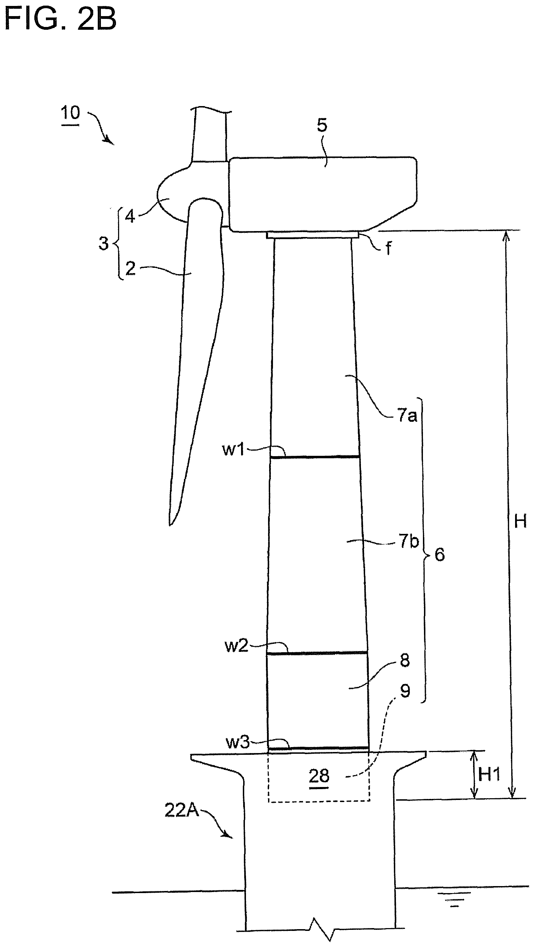

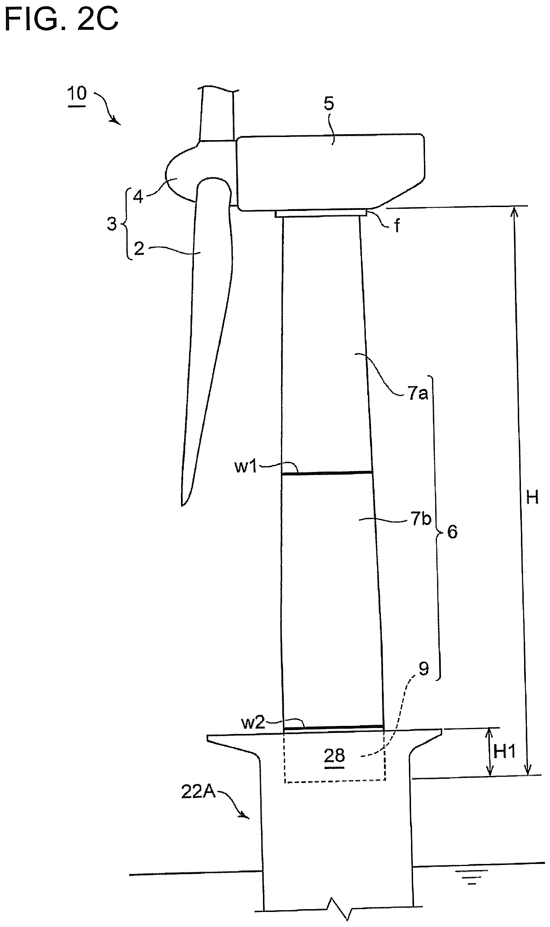

In one embodiment, as illustrated in FIG. 2A, the tower 6 includes a tower body 7 and a lower-tower connection pipe 8 connected to the tower body 7. In another embodiment, as illustrated in FIG. 2B, the tower 6 includes the tower body 7, the lower-tower connection pipe 8 connected to the tower body 7, and a ring part 9 connected to the lower-tower connection pipe 8. In yet another embodiment, as illustrated in FIG. 2C, the tower 6 includes the tower body 7 and the ring part 9 connected to the tower body 7.

In the above embodiments, the above tower body 7 includes a plurality of tower segments 7a, 7b. Each of the tower segments 7a, 7b is formed in a tubular shape, and has an outer diameter that increases gradually from the tip end side of the tower segment toward the base end. The lower-tower connection pipe 8 also has a tubular shape, and the outer diameter of the lower-tower connection pipe 8 is constant.

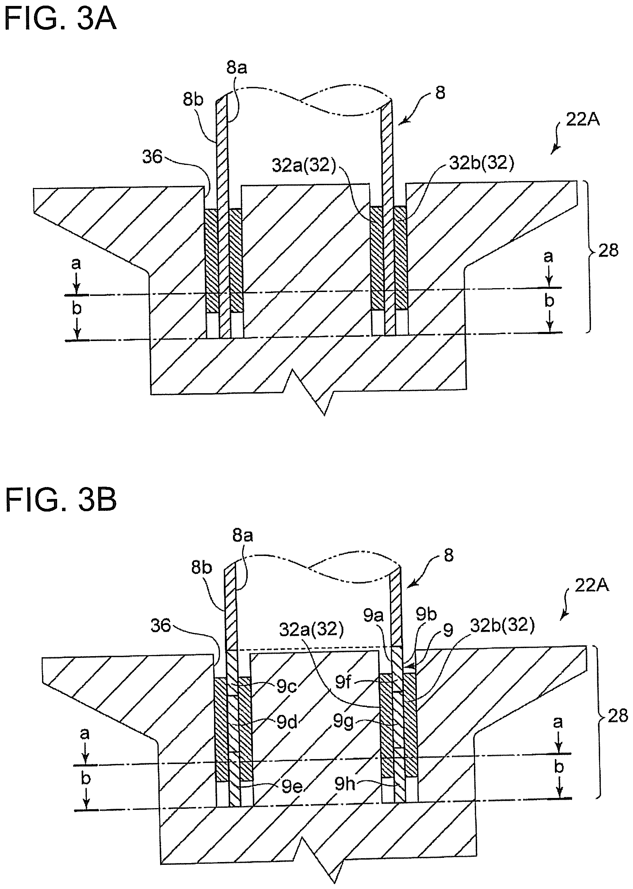

In contrast, the ring part 9 is formed in a tubular shape by joining a plurality of constituent elements, and the shape of each constituent element is not limited to a tubular shape. For instance, as illustrated in FIG. 3B described below, a plurality of semi-tubular constituent elements 9c to 9h are joined to form a tubular shape. The outer form is formed to have a constant diameter.

In some embodiments, as illustrated in FIGs. 2A to 2C, in the above tower erecting step, the base end side (the lower-tower connection pipe 8 in FIG. 2A, or the ring part 9 in FIGs. 2B and 2C) of the tower 6 is embedded inside the center column 22A. The outer circumferential surface and/or the inner circumferential surface of the embedded section 28 is welded to the center column 22A over a predetermined length in the axial direction of the tower 6 so that the tower 6 and the center column 22A are joined to each other.

With the above configuration, a section of the base end side of the tower 6 is embedded inside the center column 22A, and the circumferential surface (the outer circumferential surface and/or the inner circumferential surface) of the embedded section 28 and the center column 22A are welded to each other over a predetermined length in the axial direction. Thus, it is possible to effectively reduce the bending stress generated on the base end part of the tower 6.

Further, the erecting step of the tower 6 according to one embodiment illustrated in FIG. 2A includes a connection-pipe inserting step of inserting the lower-tower connection pipe 8 into the center column 22A, a connection-pipe joining step of welding the outer circumferential surface and/or the inner circumferential surface of the lower-tower connection pipe 8 inserted into the center column 22A to the center column 22A over a predetermined length in the axial direction of the tower 6, and a tower forming step of welding the tower body 7 (the tower segment 7b) to the lower-tower connection pipe 8 joined to the center column 22A.

In this case, the lower-tower connection pipe 8 is a connection pipe for connecting the tower body 7 and the center column 22A. The lower-tower connection pipe 8 may have a constant outer diameter unlike the tower segments 7a, 7b, and may have a length shorter than the tower segments 7a, 7b. Employing such a lower-tower connection pipe 8 makes it possible to facilitate insertion into the center column 22A and welding to the center column 22A. Thus, as compared to a case where no lower-tower connection pipe 8 is provided, workability of the tower 6 is high.

Further, the erecting step of the tower 6 according to another embodiment in FIG. 2B includes a ring part forming step of forming the ring part 9 inside the center column 22A and welding the outer circumferential surface and/or the inner circumferential surface of the ring part 9 to the center column 22A over a predetermined length in the axial direction of the tower 6, a connection-pipe joining step of welding the lower-tower connection pipe 8 to the ring part 9 formed inside the center column 22A, and a tower forming step of welding the tower body 7 (the tower segment 7b) to the lower-tower connection pipe 8 welded to the ring part 9.

In this case, the ring part 9 is firstly formed inside the center column 22A. As described above, the ring part 9 includes a plurality of constituent elements 9c to 9h coupled to one another, for example. The ring part 9 may be constructed integrally with the center column 22A. The lower-tower connection pipe 8 is welded to the ring part 9, and the tower body 7 (the tower segment 7b) is welded to the lower-tower connection pipe 8, so that the tower 6 is erected on the center column 22A. With the above configuration, the ring part 9 is formed by connecting constituent elements each of which has an optional shape. Thus, as compared to a case no ring part 9 is provided, the workability is high.

FIGs. 3A and 3B are each a schematic vertical cross-sectional view for describing a joint structure between a tower and a column according to one embodiment, respectively corresponding to the wind turbine power generating apparatuses in FIGs. 2A and 2B.

As illustrated in the drawings, an embedment space 36 in which the tip end side (the lower-tower connection pipe 8 or the ring part 9) of the tower 6 is embedded is formed inside the center column 22A. The embedment space 36 has an annular shape in a planar view.

In the embodiment illustrated in FIG. 2A described above, in the connection pipe joining step of welding the circumferential surface of the lower-tower connection pipe 8 inserted into the center column 22A to the center column 22A, the lower-tower connection pipe 8 inserted into the center column 22A is joined to the center column 22A via at least one plate member 32 extending in the axial direction of the tower 6, as illustrated in FIG. 3A. That is, the lower-tower connection part 8 and the plate member 32 are joined to each other by welding, and the plate member 32 and the center column 22A are joined to each other by welding. At this time, the inner circumferential surface 8a of the lower-tower connection pipe 8 may be joined to the center column 22A via the plate member 32a, and the outer circumferential surface 8b of the lower-tower connection pipe 8 may be joined to the center column 22A via a plate member 32b. Further, the opposite surfaces 8a, 8b of the lower-tower connection pipe 8 may be respectively joined to the center column 22A via the plate members 32a, 32b.

With the above configuration, the lower-tower connection pipe 8 and the center column 22A are joined to each other via the at least one plate member 32 extending in the axial direction of the tower 6. Thus, it is possible to effectively reduce the bending stress generated on the base end part of the tower 6.

Further, in the embodiment illustrated in FIG. 2B described above, in the ring part forming step of welding the circumferential surface of the ring part 9 to the center column 22A, the ring part 9 formed inside the center column 22A is joined to the center column 22A via at least one plate member 32 extending in the axial direction of the tower 6, as illustrated in FIG. 3B. That is, the ring part 9 and the plate member 32 are joined to each other by welding, and the plate member 32 and the center column 22A are joined to each other by welding. At this time, similarly to the case of the second embodiment illustrated in FIG. 2A described above, the inner circumferential surface 9a of the ring part 9 may be joined to the center column 22A via the plate member 32a, and the outer circumferential surface 9b of the ring part 9 may be joined to the center column 22A via the plate member 32b. Further, the opposite surfaces 9a, 9b of the ring part 9 may be respectively joined to the center column 22A via the plate members 32a, 32b.

With the above configuration, the ring part 9 and the center column 22A are joined to each other via the at least one plate member 32 extending in the axial direction of the tower 6. In this way, it is possible to effectively reduce bending stress generated on the base end part of the tower 6.

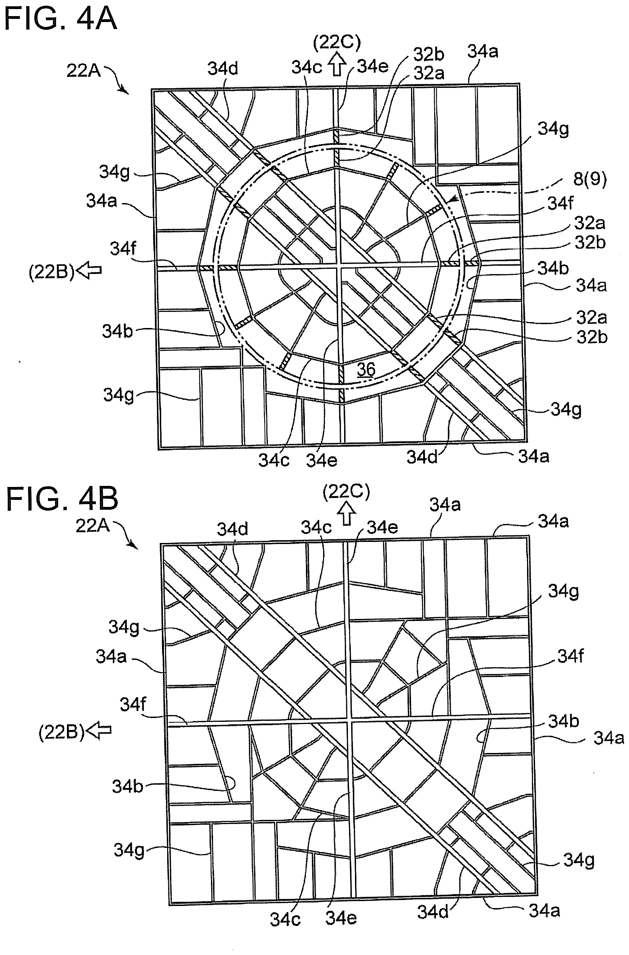

FIGs. 4A and 4B are each a lateral cross-sectional view for describing a joint structure between a tower and a column according to one embodiment taken from FIGs. 3A and 3B. FIG. 4A is taken along the line a-a, and FIG. 4B is taken along the line b-b.

In the exemplary embodiment illustrated in FIG. 4, the center column 22A is formed in a rectangular shape whose four sides are separated by outer boards 34a. As illustrated in FIG. 4B, below a section of the center column 22A into which the tower 6 is embedded, which is the tower embedded section 28 in FIGs. 3A and 3B, one main vertical frame member 34e, one main lateral frame member 34f, and two main diagonal frame members 34d, 34d are formed. The main vertical frame member 34e extends across the inside of the center column 22A in the vertical direction. The main lateral frame member 34f extends across the inside of the center column 22A in the lateral direction. The main diagonal frame members 34d, 34d extend across the inside of the center column 22A in a diagonal direction. A plurality of assist frame members 34g is disposed between the outer boards 34a, the main vertical frame member 34e, the main lateral frame member 34f, and the main diagonal frame members 34d, 34d so as to connect the above members.

On the other hand, as illustrated in FIG. 4A, in the tower embedded section 28 of the center column 22A, an outer circumferential shell member 34b and an inner circumferential shell member 34c are each formed in an annular shape. The above embedment space 36 is defined between the outer circumferential shell member 34b and the inner circumferential shell member 34c. The above main vertical frame member 34e, the main lateral frame member 34f, and the main diagonal frame members 34d, 34d do not extend inside the embedment space 36, but are cut at positions connected to the outer circumferential shell member 34b and the inner circumferential shell member 34c. The plurality of assist frame members 34g is disposed between the above outer boards 34a, the main vertical frame member 34e, the main lateral frame member 34f, the main diagonal frame members 34d, 34d, the outer circumferential shell member 34b and the inner circumferential shell member 34c so as to connect the above members.

Further, the above outer boards 34a, the main vertical frame member 34e, the main lateral frame member 34f, the main diagonal frame members 34d, 34d, the outer circumferential shell member 34b, the inner circumferential shell member 34c, and the plurality of assist frame members 34g are joined to one another by welding.

In some embodiments, as illustrated in FIG. 4A, the above plate members 32a, 32b are disposed inside the embedment space 36 so as to be positioned on extended lines of the above main vertical frame member 34e, the main lateral frame member 34f, and the main diagonal frame members 34d, 34d.

With the above configuration, it is possible to effectively transmit the bending moment applied to the base end part of the tower 6 to the entire center column 22A via the main vertical frame member 34e, the main lateral frame member 34f, and the main diagonal frame members 34d, 34d.

Further, in some embodiments, the above two main diagonal frame members 34d, 34d extend parallel to the bisector of an intersection angle between the first lower hull 24A connecting the center column 22A and the column 22B and the second lower hull 24B connecting the center column 22A and the column 22C.

With this configuration, the above main diagonal frame members 34d, 34d extend substantially in a direction of main wind, which makes it possible to effectively resist the bending moment transmitted from the tower 6 to the center column 22A.

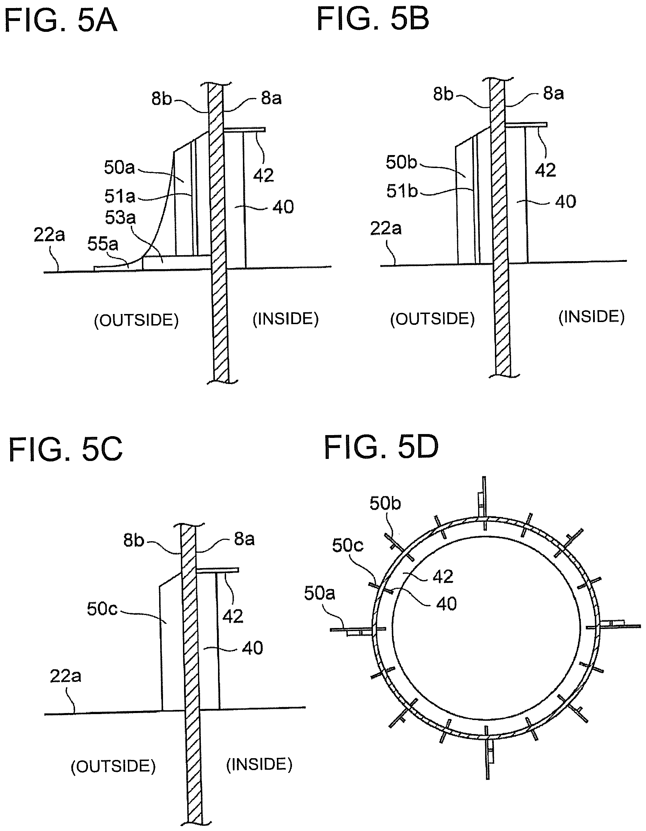

FIGs. 5A to 5D are each a diagram of reinforcement ribs according to one embodiment.

In some embodiments, as illustrated in FIG. 5, at least one reinforcement ribs 40, 50a, 50b, 50c are welded to the opposite surfaces 8a, 8b, which are the outer circumferential surface 8b and the inner circumferential surface 8a, of the lower-tower connection pipe 8 of the tower 6. The reinforcement ribs 40, 50a, 50b, 50c each extend over a predetermined length from a position corresponding to the top surface 22a of the center column 22A toward the tip end of the tower 6 in the axial direction.

The reinforcement rib (inner reinforcement rib) 40 includes a rectangular plate member. The reinforcement rib 40 is welded to the inner circumferential surface 8a of the lower-tower connection pipe 8, and extends in the axial direction of the tower 6. Further, as illustrated in FIG. 5D, a plurality of the inner reinforcement ribs 40 is arranged at equal intervals in the circumferential direction at the inner circumferential side of the lower-tower connection pipe 8. Further, an annular flat ring 42 is disposed over the distal ends of the inner reinforcement ribs 40.

Each of the reinforcement ribs (outer reinforcement ribs) 50a, 50b, 50c includes a plate member having a slanted side at the distal end. The outer reinforcement ribs 50a, 50b, 50c are each welded to the outer circumferential surface 8b of the lower-tower connection pipe 8, and extend in the axial direction of the tower 6. Further, as illustrated in FIG. 5D, the plurality of outer reinforcement ribs 50a, 50b, 50c is arranged at equal intervals in the circumferential direction at the outer circumferential side of the lower-tower connection pipe 8.

As illustrated in FIG. 5A, an outer stiffening rib 51a is welded to a flat surface of the outer reinforcement rib 50a in the axial direction. Further, the outer reinforcement rib 50a is disposed on a mounting 53a fixed on the top surface 22a of the center column 22A. Further, a skirt plate 55a that inclines gradually outward is welded to the outer reinforcement rib 50a. Further, as illustrated in FIG. 5B, a stiffening rib 51b is welded to a flat surface of the outer reinforcement rib 50b in the axial direction. On the other hand, as illustrated in FIG. 5C, no stiffening rib is welded to the outer reinforcement rib 50c. Further, the outer reinforcement rib 50c has a narrower width than the outer reinforcement ribs 50a, 50b.

With the above reinforcement ribs 40, 50a, 50b, 50c welded to the opposite surfaces of the lower-tower connection pipe 8, the reinforcement ribs are disposed at positions to which the largest bending moment is applied, which makes it possible to effectively reduce the bending stress generated on the tower 6.

Here, the reinforcement ribs 40, 50a, 50b, 50c may not be necessarily welded to both of the opposite surfaces 8a, 8b of the lower-tower connection pipe 8, and may be welded to only one of the outer circumferential surface 8b or the inner circumferential surface 8a. Further, since the reinforcement ribs 40, 50a, 50b, 50c are welded to the top surface 22a of the center column 22A, it is possible to enhance the connection between the tower 6 and the center column 22A, and to further reduce the bending stress generated on the tower 6.

Meanwhile, in the embodiment illustrated in FIG. 2A described above, the connection pipe inserting step and the connection pipe joining step are performed while the floating body 20 is disposed in a dock or on the ground, for instance. Further, the above tower forming step is carried out while the floating-body 20 is floated on water surface and is berthed.

With the above configuration, the lower-tower connection pipe 8 is joined to the center column 22A while the floating body 20 is stably disposed in a dock or on the ground, which results in high workability upon welding the lower-tower connection pipe 8 to the center column 22A. Further, since the tower forming step is performed while the floating body 20 is berthed, it is possible to hoist the tower body 7 (tower segment 7b) from the ground and lower the same to be joined to the lower-tower connection pipe 8, and also to tow the completed floating-body wind turbine power generating apparatus 1 to a desired location directly after completion of assembly.

Further, in the embodiment illustrated in FIG. 2B described above, the ring part forming step and the connection pipe joining step are performed while the floating body 20 is disposed in a dock or on the ground, for instance. Further, the above tower forming step is carried out while the floating body 20 is floated on water surface and is berthed.

With the above configuration, the ring part 9 is formed inside the center column 22A and the lower-tower connection pipe 8 is welded to the ring part 9 while the floating body 20 is stably disposed in a dock or on the ground, which results in high workability. Further, since the tower forming step is performed while the floating body 20 is berthed, it is possible to hoist the tower body 7 (tower segment 7b) from the ground and lower the same to be joined to the lower-tower connection pipe 8, and also to tow the completed floating-body wind turbine power generating apparatus 1 to a desired location directly after completion of assembly.

In some embodiments, as illustrated in FIGs. 2A and 2B, the welded spot w2 between the lower-tower connection pipe 8 and the tower body 7 (tower segment 7b) is disposed above the top surface 22a of the center column 22A. The above tower erecting step includes a scaffold providing step of providing a scaffold for workers to move up at least to the height of the welded spot w2 between the lower-tower connection pipe 8 and the tower body 7 (tower segment 7b) along at least one of the outer circumferential surface 8b or the inner circumferential surface 8a of the lower-tower connection pipe 8, before the tower forming step.

As described above, the tower forming step is carried out while the floating body 20 is floated on water surface. Thus, providing such a scaffold on the top surface 22a of the center column 22A makes it possible to join the lower-tower connection pipe 8 and the tower body 7 (tower segment 7b) by welding upon performing the tower forming step.

Further, as described above, the tower body 7 includes the plurality of tower segments 7a, 7b. In some embodiments, the tower forming step includes a step of welding a tower segment 7b that is disposed closest to the base end side of the plurality of tower segments 7a, 7b to the lower-tower connection pipe 8, and a step of joining the plurality of tower segments 7a, 7b to one another by welding. At this time, in the tower forming step, the tower segment 7b may be first welded to the lower-tower connection pipe 8 joined to the center column 22A, and then the tower segment 7a may be hoisted by a hoisting unit such as a crane to be welded to the tower segment 7b. Further, the tower segment 7a and the tower segment 7b may be welded to each other in advance to form the tower body 7, and then the tower body 7 may be hoisted by a hoisting unit such as a crane to be welded to the lower-tower connection pipe 8. Here, in the former case, it is necessary to set up a scaffold having a height as high as the welded spot w1 between the tower segment 7a and the tower segment 7b in the scaffold providing step.

As described above, with the plurality of tower segments 7a, 7b integrated with each other by welding, it is possible enhance the bending durability of the tower body 7.

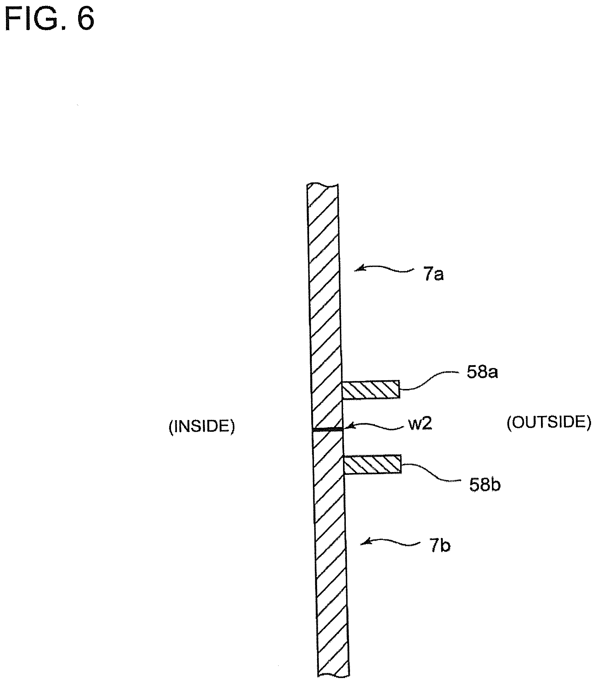

Further, in some embodiments, reinforcement rings 58a, 58b are disposed in the vicinity of each of the welded spots w1, w2 of the above described plurality of tower segments 7a, 7b. For instance, as illustrated in FIG. 6, the reinforcement ring 58a is disposed in the vicinity of the welded spot w2 of the tower segment 7a, and the reinforcement ring 58b is disposed in the vicinity of the welded spot w2 of the tower segment 7b. Although not illustrated, the reinforcement ring 58b is similarly disposed in the vicinity of the welded spot w1 of the tower segment 7b. The reinforcement rings 58a, 58b are each formed in an annular shape in a planar view, and joined by welding to the outer circumferential surfaces, for instance, of the tower segments 7a, 7b.

The respective welded spots w1, w2 of the tower segments 7a, 7b are also open ends and thus easily deformed by the weight of the tower segments 7a, 7b. Thus, as described above, providing the reinforcement rings 58a, 58b in the vicinity of the welded spots w1, w2, makes it possible to prevent deformation of the tower segments 7a, 7b at the welded spots w1, w2.

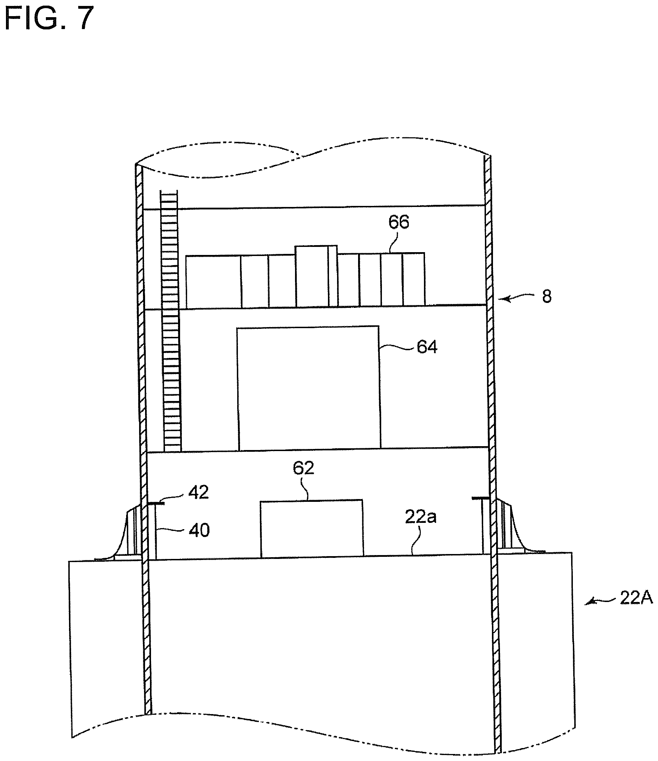

FIG. 7 is a cross-sectional view of the inside of a lower-tower connection pipe according to one embodiment.

In some embodiments, at least an operation unit for floating-state control devices and the like for controlling the floating state of the floating body 20 is disposed inside the lower-tower connection pipe 8. That is, as illustrated in FIG. 7, inside the lower-tower connection pipe 8, a diesel generator 62 and a transformer 64 for supplying electric power for starting various devices disposed in the floating body 20, and an operation unit 66 for controlling float-sink control devices such as a ballast pump and an opening-and-closing device disposed inside the floating body 20 are disposed.

As described above, the lower-tower connection pipe 8 is joined to the floating body 20 while the floating body 20 is disposed on the ground in a dock, for instance. Thus, with the operation unit 66 for float-sink control devices for controlling the float-sink state of the floating body 20 disposed inside the lower-tower connection pipe 8, it is possible to conduct a sink-float test immediately after completion of the joining work of the lower-tower connection pipe 8 to the floating body 20, on stable water surface in the vicinity of a dock, for instance.

In some embodiments, as illustrated in FIGs. 2A to 2C, H1/H falls within the range of from 0.03 to 0.15, where H1 is the embedment length by which the tower 6 is embedded into the center column 22A, and H is the entire length of the tower 6 including the embedment length H1.

The longer the embedment length inside the center column 22A is, the more the bending stress generated at the base end part of the tower 6 can be reduced. However, on the other hand, increasing the embedment length of the tower 6 may result in an increase in the construction cost. Thus, setting the ratio of the embedment length H1 to the entire length H of the tower 6 in the above range makes it possible to achieve a good balance of the bending durability and the construction cost in the tower 6.

Further, in some embodiments, for instance as illustrated in FIG. 4, the top surface 22a of the center column 22A is formed in a rectangular shape in a planar view. Further, as described above, the annular embedment space 36 having an opening toward a top surface is formed inside the center column 22A.

Generally, while the center column 22A is formed to have a rectangular cross section, the tower 6 is formed in a tubular shape, and thus the shapes of the center column 22A and the tower 6 are different. Thus, with the annular embedment space 36 having an opening toward the top surface formed inside the center column 22A and the base end side (the lower-tower connection pipe 8 in FIG. 2A or the ring part 9 in FIGs. 2B and 2C) of the tower 6 embedded in the embedment space 36, it is possible to easily connect the tower 6 and the center column 22A. The base end side of the tower 6 is the lower-tower connection pipe 8 in FIG. 2A, or the ring part 9 in FIGs. 2B and 2C.

Embodiments of the present invention were described in detail above, but the present invention is not limited thereto, and various amendments and modifications may be implemented within a scope that does not depart from the present invention. For instance, more than one of the above embodiments may be suitably combined.

For instance, the structure of the floating body 20 is not limited to the above substantially V shape. For instance, a triangular pattern in which the left column 22B and the right column 22C are connected by the third lower hull, or a quadrilateral shape including four columns 22 and four lower hulls 24 connecting the four columns 22 can be employed, for instance. Further, the tower 6 of the wind turbine generator 10 may not be necessarily erected on the center column 22A, and the number of the tower 6 is not limited to one. An optional number of towers 6 may be erected on an optional column 22 taking into account the balance of the floating body 20.

### Reference Signs List

- 1: Floating-body wind turbine power generating apparatus
- 2: Blade
- 3: Rotor
- 4: Hub
- 5: Nacelle
- 6: Tower
- 7: Tower body
- 7a, 7b: Tower segment
- 8: Lower-tower connection pipe
- 9: Ring part
- 9c to 9h: Constituent element
- 10: Wind turbine generator
- 20: Floating body
- 22, 22a to 22c: Column
- 22a: Top surface of column
- 24A: First lower hull
- 24B: Second lower hull
- 26: Mooring cable
- 28: Embedded section of tower
- 32, 32a, 32b: Plate member
- 34a: Outer board
- 34b: Outer circumferential shell member
- 34c: Inner circumferential shell member
- 34d: Main diagonal frame member
- 34e: Main vertical frame member
- 34f: Main lateral frame member
- 34g: Assist frame member
- 36: Embedment space
- 40: Inner reinforcement rib
- 42: Flat ring
- 50a to 50c: Outer reinforcement rib
- 51a, 51b: Stiffening rib
- 53a: Mounting
- 55a: Skirt plate
- 58a, 58b: Reinforcement ring
- 62: Diesel generator
- 64: Transformer
- 66: Operation unit

## Claims

1. A method of assembling a floating-body wind turbine power generating apparatus (1) which at least includes: a floating body (20) including at least one column (22,22A,22B,22C) and configured to float on water surface; and a tower (6) erected on the at least one column (22,22A,22B,22C), the method comprising
a tower erecting step of erecting the tower on the at least one column by joining the at least one column and the tower to each other by welding,
werein the tower (6) is formed in a tubular shape, and **characterized in that**
an annular embedment space (36) having an opening toward a top surface (22a) is formed inside the at least one column (22,22A,22B,22C),
wherein, in the tower erecting step, the tower and the at least one column are joined to each other by embedding a base end side of the tower (6) into the embedment space (36), and welding an outer circumferential surface and/or an inner circumferential surface of an embedded section to the at least one column over a predetermined length (L1,L2,L3) in an axial direction of the tower.

2. The method of assembling a floating-body wind turbine power generating apparatus according to claim 1,
wherein the tower (6) includes a tower body (7) and a lower-tower connection pipe (8) connected to the tower body (6), and
wherein the tower erecting step includes:
a connection-pipe inserting step of inserting the lower-tower connection pipe (8) into the at least one column (22,22A,22B,22C);
a connection-pipe joining step of welding an outer circumferential surface (8b) and/or an inner circumferential surface (8a) of the lower-tower connection pipe (8) inserted into the at least one column (22,22A,22B,22C) to the at least one column over a predetermined length in the axial direction of the tower; and
a tower forming step of welding the tower body (7) to the lower-tower connection pipe (8) joined to the at least one column.

3. The method of assembling a floating-body wind turbine power generating apparatus according to claim 2,
wherein, in the connection-pipe joining step, the lower-tower connection pipe (8) inserted into the at least one column (22,22A,22B,22C) is joined to the at least one column via at least one plate member (32,32a,32b) which extends in the axial direction of the tower.

4. The method of assembling a floating-body wind turbine power generating apparatus according to claim 1,
wherein the tower (6) includes a tower body (7), a lower-tower connection pipe (8) connected to the tower body, and a ring part (9) connected to the lower-tower connection pipe, and
wherein the tower erecting step includes:
a ring-part forming step of forming the ring part (9) inside the at least one column (22,22A,22B,22C) and welding one of an outer circumferential surface (9b) or an inner circumferential surface (9a) of the ring part (9) to the at least one column over a predetermined length in the axial direction of the tower;
a connection-pipe joining step of welding the lower-tower connection pipe (8) to the ring part (9) formed inside the at least one column (22,22A,22B,22C); and
a tower forming step of welding the tower body (7) to the lower-tower connection pipe (8) welded to the ring part (9).

5. The method of assembling a floating-body wind turbine power generating apparatus according to claim 4,
wherein, in the ring-part forming step, the ring part (9) formed inside the at least one column (22,22A,22B,22C) is joined to the at least one column via at least one plate member (32,32a,32b) which extends in the axial direction of the tower.

6. The method of assembling a floating-body wind turbine power generating apparatus according to any one of claims 2 to 5,
wherein at least one reinforcement rib (40,50a,50b,50c) is welded to an outer circumferential surface (8b) and/or an inner circumferential surface of the tower (8a), the at least one reinforcement rib extending over a predetermined length toward a tip end of the tower (7) in the axial direction from a position corresponding to the top surface (22a) of the at least one column (22,22A,22B,22C).

7. The method of assembling a floating-body wind turbine power generating apparatus according to claim 2 or 3,
wherein the connection-pipe inserting step and the connection-pipe joining step are performed while the floating-body (20) is in a dock or on ground, and
wherein the tower forming step is performed while the floating body (20) is floating on water surface and is berthed.

8. The method of assembling a floating-body wind turbine power generating apparatus according to claim 4 or 5,
wherein the ring-part forming step and the connection-pipe joining step are performed while the floating-body (20) is in a dock or on ground, and
wherein the tower forming step is performed while the floating body (20) is floating on water surface and is berthed.

9. The method of assembling a floating-body wind turbine power generating apparatus according to claim 7 or 8,
wherein a welded spot (w2) between the lower-tower connection pipe (8) and the tower body (7) is disposed above the top surface (22a) of the at least one column (22A), and
wherein the tower erecting step includes a scaffold providing step of providing a scaffold for workers to move up to at least a height of the welded spot (w2) between the lower-tower connection pipe and the tower body, along at least one of the outer circumferential surface (8b) or the inner circumferential surface (8a) of the lower-tower connection pipe, before the tower forming step.

10. The method of assembling a floating-body wind turbine power generating apparatus according to any one of claims 2 to 9,
wherein the tower body (7) comprises a plurality of tower segments (7a,7b), and
wherein the tower forming step includes a step of welding a tower segment (7b) positioned closest to the base end side from among the plurality of tower segments to the lower-tower connection pipe (8), and a step of joining the plurality of tower segments (7a,7b) to one another by welding.

11. The method of assembling a floating-body wind turbine power generating apparatus according to claim 10,
wherein a reinforcement ring (58a,58b) is disposed in the vicinity of a welded spot (w1,w2) of each of the plurality of the tower segments.

12. The method of assembling a floating-body wind turbine power generating apparatus according to claim 7 or 8,
wherein at least an operation unit (66) for float-sink control devices for controlling a float-sink state of the floating body (20) is disposed inside the lower-tower connection pipe (8).

13. The method of assembling a floating-body wind turbine power generating apparatus according to claims 2 to 12,
wherein H1/H falls within a range of from 0.03 to 0.15, where H1 is an embedment length by which the tower (6) is embedded into the embedment space (36), and H is an entire length of the tower including the embedment length H1.

14. The method of assembling a floating-body wind turbine power generating apparatus according to claim 1 to 13,
wherein the top surface (22a) of the at least one column (22A) is formed in a rectangular shape in a planar view.

15. A floating-body wind turbine power generating apparatus (1) at least comprising:
a floating body (20) including at least one column (22) and configured to float on water surface; and
a tower (6) erected on the at least one column (22),
werein the tower (6) is formed in a tubular shape, and **characterized in that**
an annular embedment space (36) having an opening toward a top surface (22a) is formed inside the at least one column (22,22A,22B,22C),
wherein the tower (6) and the at least one column (22) are joined to each other by embedding a base end side of the tower (6) into the embedment space (36), and welding an outer circumferential surface and/or an inner circumferential surface of an embedded section to the at least one column over a predetermined length in an axial direction of the tower (6).

## Patentansprüche

1. Verfahren zum Zusammenbauen einer Windenergieerzeugungsanlage (1) mit einem Schwimmkörper, die mindestens Folgendes umfasst: einen Schwimmkörper (20), der mindestens eine Säule (22, 22A, 22B, 22C) umfasst und konfiguriert ist, um auf einer Wasseroberfläche zu schwimmen; und einen Turm (6), der auf der mindestens einen Säule (22, 22A, 22B, 22C) errichtet ist, wobei das Verfahren Folgendes umfasst:
einen Turmerrichtungsschritt zum Errichten des Turms auf der mindestens einen Säule durch Verbinden der mindestens einen Säule und des Turms miteinander durch Schweißen,
wobei der Turm (6) mit einer rohrförmigen Form gestaltet ist, und **dadurch gekennzeichnet ist, dass**
ein ringförmiger Einbettungsraum (36), der eine zu einer oberen Oberfläche (22a) gerichtete Öffnung aufweist, innerhalb der mindestens einen Säule (22, 22A, 22B, 22C) ausgebildet ist,
wobei, im Turmerrichtungsschritt, der Turm und die mindestens eine Säule miteinander verbunden werden durch Einbetten einer Basisendseite des Turms (6) in den Einbettungsraum (36) und Verschweißen einer Außenumfangsfläche und/oder einer Innenumfangsfläche eines eingebetteten Abschnitts mit der mindestens einen Säule über eine im Voraus bestimmte Länge (L1, L2, L3) in einer axialen Richtung des Turms.

2. Verfahren zum Zusammenbauen einer Windenergieerzeugungsanlage mit einem Schwimmkörper nach Anspruch 1,
wobei der Turm (6) einen Turmkörper (7) und ein unteres Turmverbindungsrohr (8) umfasst, das mit dem Turmkörper (6) verbunden ist, und
wobei der Turmerrichtungsschritt Folgendes umfasst:
einen Verbindungsrohr-Einfügungsschritt zum Einfügen des unteren Turmverbindungsrohrs (8) in die mindestens eine Säule (22, 22A, 22B, 22C);
einen Verbindungsrohr-Verbindungsschritt zum Verschweißen einer Außenumfangsfläche (8b) und/oder einer Innenumfangsfläche (8a) des in die mindestens eine Säule (22, 22A, 22B, 22C) eingeführten unteren Turmverbindungsrohrs (8) mit der mindestens einen Säule über eine im Voraus bestimmte Länge in der axialen Richtung des Turms; und
einen Turmformungsschritt zum Verschweißen des Turmkörpers (7) mit dem unteren Turmverbindungsrohr (8), das mit der mindestens einen Säule verbunden ist.

3. Verfahren zum Zusammenbauen einer Windenergieerzeugungsanlage mit einem Schwimmkörper nach Anspruch 2,
wobei, im Verbindungsrohr-Verbindungsschritt, das in die mindestens eine Säule (22, 22A, 22B, 22C) eingeführte untere Turmverbindungsrohr (8) mit der mindestens einen Säule über mindestens ein Plattenelement (32, 32a, 32b) verbunden wird, das sich in der axialen Richtung des Turms erstreckt.

4. Verfahren zum Zusammenbauen einer Windenergieerzeugungsanlage mit einem Schwimmkörper nach Anspruch 1,
wobei der Turm (6), einen Turmkörper (7), ein mit dem Turmkörper verbundenes unteres Turmverbindungsrohr (8), und einen mit dem unteren Turmverbindungsrohr verbundenen Ringteil (9), aufweist, und
wobei der Turmerrichtungsschritt Folgendes umfasst:
einen Ringteilbildungsschritt zum Ausbilden des Ringteils (9) innerhalb der mindestens einen Säule (22, 22A, 22B, 22C) und Verschweißen einer von einer Außenumfangsfläche (9b) oder einer Innenumfangsfläche (9a) des Ringteils (9) mit der mindestens einen Säule über eine im Voraus bestimmte Länge in der axialen Richtung des Turms;
einen Verbindungsrohr-Verbindungsschritt zum Verschweißen des unteren Turmverbindungsrohrs (8) mit dem innerhalb der mindestens einen Säule (22, 22A, 22B, 22C) gebildeten Ringteil (9); und
einen Turmformungsschritt zum Verschweißen des Turmkörpers (7) mit dem am Ringteil (9) angeschweißten unteren Turmverbindungsrohr (8).

5. Verfahren zum Zusammenbauen einer Windenergieerzeugungsanlage mit einem Schwimmkörper nach Anspruch 4,
wobei, im Ringteilbildungsschritt, der im Inneren der mindestens einen Säule (22, 22A, 22B, 22C) ausgebildete Ringteil (9) mit der mindestens einen Säule über mindestens ein Plattenelement (32, 32a, 32b), das sich in der axialen Richtung des Turms erstreckt verbunden ist.

6. Verfahren zum Zusammenbauen einer Windenergieerzeugungsanlage mit einem Schwimmkörper nach einem der Ansprüche 2 bis 5,
wobei mindestens eine Verstärkungsrippe (40, 50a, 50b, 50c) an eine Außenumfangsfläche (8b) und/oder eine Innenumfangsfläche (8a) des Turms angeschweißt ist, wobei die mindestens eine Verstärkungsrippe sich über eine im Voraus bestimmte Länge in Richtung eines vorderen Endes des Turms (7) in der axialen Richtung von einer Position erstreckt, die einer oberen Oberfläche (22a) der mindestens einen Säule (22, 22A, 22B, 22C) entspricht.

7. Verfahren zum Zusammenbauen einer Windenergieerzeugungsanlage mit einem Schwimmkörper nach Anspruch 2 oder 3,
wobei der Verbindungsrohr-Einfügungsschritt und der Verbindungsrohr-Verbindungsschritt durchgeführt werden, während sich der Schwimmkörper (20) in einem Dock oder auf dem Boden befindet, und
wobei der Turmformungsschritt durchgeführt wird, während der Schwimmkörper (20) auf der Wasseroberfläche schwimmt und verankert ist.

8. Verfahren zum Zusammenbauen einer Windenergieerzeugungsanlage mit einem Schwimmkörper nach Anspruch 4 oder 5,
wobei der Ringteilbildungsschritt und der Verbindungsrohr-Verbindungsschritt durchgeführt werden, während sich der Schwimmkörper (20) in einem Dock oder auf dem Boden befindet, und
wobei der Turmformungsschritt durchgeführt wird, während der Schwimmkörper (20) auf der Wasseroberfläche schwimmt und verankert ist.

9. Verfahren zum Zusammenbauen einer Windenergieerzeugungsanlage mit einem Schwimmkörper nach Anspruch 7 oder 8,
wobei eine Schweißstelle (w2) zwischen dem unteren Turmverbindungsrohr (8) und dem Turmkörper (7) oberhalb der oberen Oberfläche (22a) der mindestens einen Säule (22A) angeordnet ist, und
wobei der Turmerrichtungsschritt einen Gerüstbereitstellungsschritt zum Bereitstellen eines Gerüsts für Arbeiter umfasst, um sich, vor dem Turmbildungsschritt, auf mindestens eine Höhe der Schweißstelle (w2) zwischen dem unteren Turmverbindungsrohr und dem Turmkörper entlang mindestens einer der äußeren Umfangsfläche (8b) oder der inneren Umfangsfläche (8a) des unteren Turmanschlussrohrs zu bewegen.

10. Verfahren zum Zusammenbauen einer Windenergieerzeugungsanlage mit einem Schwimmkörper nach einem der Ansprüche 2 bis 9,
wobei der Turmkörper (7) mehrere Turmsegmente (7a, 7b) umfasst, und
wobei der Turmformungsschritt einen Schritt des Versschweißens eines Turmsegments (7b), das unter den mehreren Turmsegmenten am nächsten zur Basisendseite positioniert ist, mit dem unteren Turmverbindungsrohr (8), und einem Schritt des Verbindens der mehreren Turmsegmente (7a, 7b) miteinander durch Schweißen umfasst.

11. Verfahren zum Zusammenbauen einer Windenergieerzeugungsanlage mit einem Schwimmkörper nach Anspruch 10,
wobei ein Verstärkungsring (58a, 58b) in der Nähe einer Schweißstelle (w1, w2) jedes der mehreren Turmsegmente angeordnet ist.

12. Verfahren zum Zusammenbauen einer Windenergieerzeugungsanlage mit einem Schwimmkörper nach Anspruch 7 oder 8,
wobei mindestens eine Betätigungseinheit (66) für Schwimm-Senk-Steuervorrichtungen zum Steuern eines Schwimm-Senk-Zustands des Schwimmkörpers (20) innerhalb des unteren Turmverbindungsrohrs (8) angeordnet ist.

13. Verfahren zum Zusammenbauen einer Windenergieerzeugungsanlage mit einem Schwimmkörper nach einem der Ansprüche 2 bis 12,
wobei H1/H in einen Bereich von 0,03 bis 0,15 fällt, wobei H1 eine Einbettungslänge ist, durch die der Turm (6) in den Einbettungsraum (36) eingebettet ist, und H eine gesamte Länge des Turms einschließlich der Einbettungslänge H1 ist.

14. Verfahren zum Zusammenbauen einer Windenergieerzeugungsanlage mit einem Schwimmkörper nach einem der Ansprüche 1 bis 13,
wobei die obere Oberfläche (22a) der mindestens einen Säule (22A) in einer Draufsicht in einer rechteckigen Form ausgebildet ist.

15. Windenergieerzeugungsanlage (1), die mindestens Folgendes umfasst:
einen Schwimmkörper (20), der mindestens eine Säule (22) umfasst und konfiguriert ist, um auf einer Wasseroberfläche zu schwimmen; und
einen Turm (6), der auf der mindestens einen Säule (22) errichtet ist,
wobei der Turm (6) mit einer rohrförmigen Form gestaltet ist, und **dadurch gekennzeichnet ist, dass**
ein ringförmiger Einbettungsraum (36), der eine zu einer oberen Oberfläche (22a) gerichtete Öffnung aufweist, innerhalb der mindestens einen Säule (22, 22A, 22B, 22C) ausgebildet ist,
wobei der Turm (6) und die mindestens eine Säule (22) miteinander verbunden werden durch Einbetten einer Basisendseite des Turms (6) in den Einbettungsraum (36) und Verschweißen einer Außenumfangsfläche und/oder einer Innenumfangsfläche eines eingebetteten Abschnitts mit der mindestens einen Säule über eine im Voraus bestimmte Länge in einer axialen Richtung des Turms (6).

## Revendications

1. Procédé pour assembler un appareil de génération d'énergie éolienne à corps flottant (1) qui comprend au moins : un corps flottant (20) comprenant au moins une colonne (22, 22A, 22B, 22C) et configuré pour flotter sur une surface d'eau ; et une tour (6) érigée sur la au moins une colonne (22, 22A, 22B, 22C), le procédé comprenant :
une étape d'érection de tour pour ériger la tour sur la au moins une colonne en assemblant la au moins une colonne et la tour entre elles par soudage,
dans lequel la tour (6) est formée selon une forme tubulaire, et **caractérisée en ce que** :
un espace d'encastrement annulaire (36) ayant une ouverture vers une surface supérieure (22a) est formé à l'intérieur de la au moins une colonne (22, 22A, 22B, 22C),
dans lequel, dans l'étape d'érection de tour, la tour et la au moins une colonne sont assemblées entre elles en encastrant un côté d'extrémité de base de la tour (6) dans l'espace d'encastrement (36), et en soudant une surface circonférentielle externe et/ou une surface circonférentielle interne d'une section encastrée à la au moins une colonne sur une longueur (L1, L2, L3) prédéterminée dans une direction axiale de la tour.

2. Procédé pour assembler un appareil de génération d'énergie éolienne à corps flottant selon la revendication 1,
dans lequel la tour (6) comprend un corps de tour (7) et un tuyau de raccordement de tour inférieure (8) raccordé au corps de tour (6), et
dans lequel l'étape d'érection de tour comprend :
une étape d'insertion de tuyau de raccordement pour insérer le tuyau de raccordement de tour inférieure (8) dans la au moins une colonne (22, 22A, 22B, 22C) ;
une étape d'assemblage de tuyau de raccordement pour souder une surface circonférentielle externe (8b) et/ou une surface circonférentielle interne (8a) du tuyau de raccordement de tour inférieure (8) inséré dans la au moins une colonne (22, 22A, 22B, 22C) à la au moins une colonne sur une longueur prédéterminée dans la direction axiale de la tour ; et
une étape de formation de tour pour souder le corps de tour (7) au tuyau de raccordement de tour inférieure (8) assemblé à la au moins une colonne.

3. Procédé pour assembler un appareil de génération d'énergie éolienne à corps flottant selon la revendication 2,
dans lequel, à l'étape d'assemblage de tuyau de raccordement, le tuyau de raccordement de tour inférieure (8) inséré dans la au moins une colonne (22, 22A, 22B, 22C) est assemblé à la au moins une colonne via au moins un élément de plaque (32, 32a, 32b) qui s'étend dans la direction axiale de la tour.

4. Procédé pour assembler un appareil de génération d'énergie éolienne à corps flottant selon la revendication 1,
dans lequel la tour (6) comprend un corps de tour (7), un tuyau de raccordement de tour inférieure (8) raccordé au corps de tour, et une partie annulaire (9) raccordée au tuyau de raccordement de tour inférieure, et
dans lequel l'étape d'érection de tour comprend :
une étape de formation de partie annulaire pour former la partie annulaire (9) à l'intérieur de la au moins une colonne (22, 22A, 22B, 22C) et souder l'une parmi une surface circonférentielle externe (9b) ou une surface circonférentielle interne (9a) de la partie annulaire (9) à la au moins une colonne sur une longueur prédéterminée dans la direction axiale de la tour ;
une étape d'assemblage de tuyau de raccordement pour souder le tuyau de raccordement de tour inférieure (8) sur la partie annulaire (9) formée à l'intérieur de la au moins une colonne (22, 22A, 22B, 22C) ; et
une étape de formation de tour pour souder le corps de tour (7) au tuyau de raccordement de tour inférieure (8) soudé sur la partie annulaire (9).

5. Procédé pour assembler un appareil de génération d'énergie éolienne à corps flottant selon la revendication 4,
dans lequel, à l'étape de formation de partie annulaire, la partie annulaire (9) formée à l'intérieur de la au moins une colonne (22, 22A, 22B, 22C) est assemblée à la au moins une colonne via au moins un élément de plaque (32, 32a, 32b) qui s'étend dans la direction axiale de la tour.

6. Procédé pour assembler un appareil de génération d'énergie éolienne à corps flottant selon l'une quelconque des revendications 2 à 5,
dans lequel au moins une nervure de renforcement (40, 50a, 50b, 50c) est soudée sur une surface circonférentielle externe (8b) et/ou une surface circonférentielle interne de la tour (8a), la au moins une nervure de renforcement s'étendant sur une longueur prédéterminée vers une extrémité de pointe de la tour (7) dans la direction axiale à partir d'une position correspondant à la surface supérieure (22a) de la au moins une colonne (22, 22A, 22B, 22C).

7. Procédé pour assembler un appareil de génération d'énergie éolienne à corps flottant selon la revendication 2 ou 3,
dans lequel l'étape d'insertion de tuyau de raccordement et l'étape d'assemblage de tuyau de raccordement sont réalisées alors que le corps flottant (20) est à quai ou sur le sol, et
dans lequel l'étape de formation de tour est réalisée alors que le corps flottant (20) flotte sur une surface d'eau et est amarré.

8. Procédé pour assembler un appareil de génération d'énergie éolienne à corps flottant selon la revendication 4 ou 5,
dans lequel l'étape de formation de partie annulaire et l'étape d'assemblage de tuyau de raccordement sont réalisées alors que le corps flottant (20) est à quai ou sur le sol, et
dans lequel l'étape de formation de tour est réalisée alors que le corps flottant (20) flotte sur une surface d'eau et est amarré.

9. Procédé pour assembler un appareil de génération d'énergie éolienne à corps flottant selon la revendication 7 ou 8,
dans lequel un point de soudure (w2) entre le tuyau de raccordement de tour inférieure (8) et le corps de tour (7) est disposé au-dessus de la surface supérieure (22a) de la au moins une colonne (22A), et
dans lequel l'étape d'érection de tour comprend une étape de fourniture d'échafaudage pour fournir un échafaudage pour les ouvriers afin de monter à au moins une hauteur du point de soudure (w2) entre le tuyau de raccordement de tour inférieure et le corps de tour, le long d'au moins l'une parmi la surface circonférentielle externe (8b) ou la surface circonférentielle interne (8a) du tuyau de raccordement de tour inférieure, avant l'étape de formation de tour.

10. Procédé pour assembler un appareil de génération d'énergie éolienne à corps flottant selon l'une quelconque des revendications 2 à 9,
dans lequel le corps de tour (7) comprend une pluralité de segments de tour (7a, 7b), et
dans lequel l'étape de formation de tour comprend une étape pour souder un segment de tour (7b) positionné plus à proximité du côté d'extrémité de base, de la pluralité de segments de tour au tuyau de raccordement de tour inférieure (8), et une étape pour assembler la pluralité de segments de tour (7a, 7b) entre eux par soudage.

11. Procédé pour assembler un appareil de génération d'énergie éolienne à corps flottant selon la revendication 10,
dans lequel un anneau de renforcement (58a, 58b) est disposé à proximité d'un point de soudure (w1, w2) de chacun de la pluralité de segments de tour.

12. Procédé pour assembler un appareil de génération d'énergie éolienne à corps flottant selon la revendication 7 ou 8,
dans lequel au moins une unité de commande (66) pour des dispositifs de commande de flottaison gravimétrique afin de commander un état de flottaison gravimétrique du corps flottant (20), est disposée à l'intérieur du tuyau de raccordement de tour inférieure (8).

13. Procédé pour assembler un appareil de génération d'énergie éolienne à corps flottant selon les revendications 2 à 12,
dans lequel H1/H est dans une plage de 0,03 à 0,15, où H1 est une longueur d'encastrement selon laquelle la tour (6) est encastrée dans l'espace d'encastrement (36), et H est toute la longueur de la tour comprenant la longueur d'encastrement H1.

14. Procédé pour assembler un appareil de génération d'énergie éolienne à corps flottant selon les revendications 1 à 13,
dans lequel la surface supérieure (22a) de la au moins une colonne (22A) est formée dans une forme rectangulaire sur une vue en plan.

15. Appareil de génération d'énergie éolienne à corps flottant (1) comprenant au moins :
un corps flottant (20) comprenant au moins une colonne (22) et configuré pour flotter sur une surface d'eau ; et
une tour (6) érigée sur la au moins une colonne (22),
dans lequel la tour (6) est formée selon une forme tubulaire, et **caractérisé en ce que** :
un espace d'encastrement annulaire (36) ayant une ouverture vers une surface supérieure (22a) est formé à l'intérieur de la au moins une colonne (22, 22A, 22B, 22C),
dans lequel la tour (6) et la au moins une colonne (22) sont assemblées entre elles en encastrant un côté d'extrémité de base de la tour (6) dans l'espace d'encastrement (36), et en soudant une surface circonférentielle externe et/ou une surface circonférentielle interne d'une section encastrée à la au moins une colonne sur une longueur prédéterminée dans une direction axiale de la tour (6).
